# EUROPÄISCHE PATENTSCHRIFT

(11) **EP 2 776 273 B1**
(45) Veröffentlichungstag und Bekanntmachung des Hinweises auf die Patenterteilung: **10.04.2019**
(21) Anmeldenummer: 12758411.8
(22) Anmeldetag: 12.09.2012
(51) Int. Cl.: B60N 2/02, B60N 2/80, B60N 2/18, B60N 2/62

(54) **FAHRZEUGSITZ, INSBESONDERE HINTERSITZANLAGE MIT SITZNEIGUNGSVERSTELLUNG**
VEHICLE SEAT, IN PARTICULAR REAR SEAT COMPRISING DEVICE FOR ADJUSTING SEAT ANGLES
SIÈGE DE VÉHICULE, EN PARTICULIER SIÈGE ARRIÈRE COMPRENANT DISPOSITIF DESTINÉ AU RÉGLAGE DE L'INCLINAISON DE SIÈGE

(30) Priorität: 11.11.2011 DE 102011118344
(43) Veröffentlichungstag der Anmeldung: 17.09.2014
(73) Patentinhaber: Volkswagen Aktiengesellschaft, 38440 Wolfsburg (DE)
(72) Erfinder: BOY, Hans-Joachim, 38518 Gifhorn (DE); WINKELHAKE, Bernd, 38518 Gifhorn (DE); DÄNEKAS, Lars, 38527 Meine-Grassel (DE)
(86) Internationale Anmeldenummer: PCT/EP2012/003822
(87) Internationale Veröffentlichungsnummer: WO 2013/068061

(56) Entgegenhaltungen:
- WO-A1-2005/095151
- DE-A1-102005 039 310
- GB-A- 2 255 905
- JP-U- 63 005 846

## Beschreibung

Die Erfindung betrifft einen Fahrzeugsitz, insbesondere eine Hintersitzanlage mit Sitzneigungsverstellung nach dem Oberbegriff des Anspruchs 1 und eine Anordnung des Fahrzeugsitzes gemäß dem Oberbegriff des Anspruchs 10.

Bei einem allgemein bekannten, gattungsgemäßen Fahrzeugsitz mit einem Sitzteil und einem Lehnenteil ist das Sitzteil zu einer Sitzneigungseinstellung mit anhebbarer und absenkbarer Sitzvorderkante um eine horizontale Querachse verschwenkbar gelagert.

Weiter ist es allgemein bekannt, Sitzteile und Lehnenteile mit einem Drahtrahmen als Gitterrahmen herzustellen, wobei die Polsterung jeweils aus einem Schaumteil und einem Bezug besteht.

Zudem ist es allgemein bekannt, die hintere Sitzreihe eines Fahrzeugs als Sitzbank auszubilden und die zugeordnete Lehne symmetrisch oder unsymmetrisch zu teilen, wobei dann zur Vergrößerung des Laderaums eines oder beide Lehnenteile auf einen Sitzplatz der Sitzbank klappbar sind.

Die Druckschrift DE 10 2009 020 659 A1 beschreibt beispielsweise einen Fahrzeugsitz mit wenigstens einem Sitzteil und einem Lehnenteil, bei dem das Sitzteil zu einer Sitzneigungseinstellung mit anhebbarer und absenkbarer Sitzvorderkante um eine horizontale Querachse verschwenkbar gelagert ist. Ein Sitzvorderteil ist zwischen einer oberen Endstellung mit angehobener Sitzvorderkante zur Oberschenkelunterstützung und einer unteren Endstellung mit abgesenkter Sitzvorderkante frei verschwenkbar und der verschwenkbare Sitzvorderteil ist mit wenigstens einem Federelement in Richtung auf die obere Endstellung vorgespannt.

Eine andere Druckschrift, die DE 10 2005 039 310 A1, offenbart einen verstellbaren Rücksitz. Der Rücksitz weist eine Sitzschale, ein von dieser aufgenommenes Sitzpolster, einen Lehnenträger, ein von diesem aufgenommenes Lehnenpolster sowie eine im Lehnenträger gelagerte Kopfstütze auf. Die Sitzschale und der Lehnenträger sind gelenkig miteinander verbunden. Der Lehnenträger ist in seinem oberen Bereich in der Karosserie schwenkbar gelagert. Dabei ist die Sitzschale in ihrem vorderen Bereich im Karosserieboden gelagert, wobei die Sitzschale über im Karosserieboden gelagerte Stellmittel in Längsrichtung und Höhenerstreckung des Fahrzeugs verstellbar ist.

Eine solche Sitzneigungseinstellung dient zur Verbesserung des Sitzkomforts mit einer an eine Oberschenkelneigung angepassten Oberschenkelunterstützung. Herkömmliche Systeme zur Sitzneigungseinstellung führen in der Regel zu relativ aufwendigen Sitzgestellen mit mechanischen Verstellern, Verriegelungen und Betätigungen bei entsprechend hohen Kosten. Insbesondere bei dem verstellbaren Rücksitz der DE 10 2005 039 310 A1 werden separate Stellhebel als Stellmittel für die Sitzschale benötigt. Solche Stellhebel stören zumeist erheblich, da sie eine bediennahe Anordnung benötigen, die zumeist zu einer Komfort-Einschränkung führt. Die Verwendung von Federelementen zum Anheben eines Sitzvorderteiles eines Fahrzeugsitzes gemäß der Druckschrift DE 10 2009 020 659 A1 erscheint preiswert und einfach, jedoch besteht der Nachteil darin, dass ein einmal ausgewähltes Federelement mit einer entsprechenden Federkennlinie ein individuelles Anheben eines Sitzteiles nur bedingt erlaubt. Zwischenstellungen sind bei einer Lösung mit Federelementen nicht realisierbar.

Ferner sind gattungsbildende Fahrzeugsitze in den Druckschriften JP 63 A15846 U, GB 2 255 905 A und WO 2005/95151 A1 beschrieben.

Ausgehend von diesem Stand der Technik ist es die Aufgabe der Erfindung, einen Fahrzeugsitz, insbesondere als Bestandteil einer hinteren Sitzreihe eines Fahrzeugs so auszubilden, dass mit einfachen und kostengünstigen Maßnahmen ein verbesserter Sitzkomfort zur Verfügung gestellt wird.

Ausgangspunkt ist ein Fahrzeugsitz mit einer Neigungsverstelleinrichtung, umfassend eine Rückenlehne und ein Sitzteil, welches mittels der Neigungsverstelleinrichtung zu einer von der Rückenlehne unabhängigen Einstellung der Sitzneigung um eine horizontale Schwenkachse beweglich angeordnet ist, wobei die Schwenkachse zwischen einem beweglichen Polsterteil und einem festen Polsterteil des Sitzteiles verläuft, wobei die Neigungsverstelleinrichtung eine obere Trägerplatte und eine untere Trägerplatte aufweist, wobei das bewegliche Polsterteil auf der oberen Trägerplatte ruht, und zwischen den Trägerplatten ein Stellmittel angeordnet ist, mittels dem eine Bewegung der oberen Trägerplatte gegenüber der unteren Trägerplatte bewirkbar ist, wodurch das bewegliche Polsterteil von einer im Wesentlichen ebenen Nichtausstellposition in eine geneigte Ausstellposition bringbar ist.

Erfindungsgemäß ist vorgesehen, dass die untere Trägerplatte lagestabil im vorderen und hinteren Bereich an dafür vorgesehenen Querdrähten an einem Drahtrahmen befestigt ist.

Ausgangspunkt der Erfindung sind Fahrzeugsitze, die aus den Druckschriften DE 10 2009 020 659 A1, JP 63 A15846 U, GB 2 255 905 A und WO2005095151A1 bekannt sind.

In bevorzugter Ausgestaltung der Erfindung sind die Polsterteile einstückig oder zweistückig ausgebildet, wobei das bewegliche Polsterteil und das unbewegliche Polsterteil in der zweistückigen Ausgestaltung eine Trennfuge ausbildet. Die Trennfuge trennt das bewegliche von dem unbeweglichen Polsterteil in einer ersten Ausführungsvariante vollständig oder die Trennfuge ist einer zweiten Ausführungsvariante nur teilweise ausgebildet, so dass das bewegliche Polsterteil noch teilweise mit dem unbeweglichen Polsterteil in Verbindung steht. Ein flexibler Schaum ermöglicht eine einstückige Ausgestaltung, während weniger flexible Schäume gegebenenfalls eine zweistückige Ausgestaltung der Polsterteile mit einer zumindest teilweise ausgeführten Trennfuge erfordern. Eine einstückige Ausgestaltung ist hinsichtlich der einfacheren Herstellung vorteilhafter als eine zweistückige Ausbildung. Im Ausführungsbeispiel wird, da eine einstückige Ausgestaltung keiner weiteren Erklärung bedarf, eine zweistückige Ausgestaltung mit einer Vertikaltrennfuge in y-Richtung näher erläutert.

In weiterer bevorzugter Ausgestaltung ist vorgesehen, dass die Schwenkachse des beweglichen Polsterteiles nahe der Oberseite der aneinander angrenzenden Polsterteile ausgebildet ist, wobei eine Trennfuge insbesondere bei einer zweiteiligen Ausgestaltung der Polsterteile im oberen Bereich einer Längsachse der Trennfuge liegt, wodurch eine hohe Drehpunktlage des beweglichen Polsterteiles gegenüber dem festen Polsterteil ausgebildet ist.

In bevorzugter Ausgestaltung der Erfindung steht die untere Trägerplatte mit der Karosserie über einen Drahtrahmen in Verbindung.

Ausgehend von der Anordnung eines mit einer Karosserie verbundenen Fahrzeugsitzes mit einer Neigungsverstelleinrichtung, wobei der Fahrzeugsitz eine Rückenlehne und ein Sitzteil umfasst, welches mittels der Neigungsverstelleinrichtung zu einer von der Rückenlehne unabhängigen Einstellung der Sitzneigung um eine horizontale Schwenkachse beweglich angeordnet ist, wobei die Schwenkachse zwischen einem beweglichen Polsterteil und einem festen Polsterteil des Sitzteiles verläuft, und die Neigungsverstelleinrichtung eine obere Trägerplatte und eine untere Trägerplatte aufweist, wobei das bewegliche Polsterteil auf der oberen Trägerplatte ruht, und zwischen den Trägerplatten ein Stellmittel angeordnet ist, mittels dem eine Bewegung der oberen Trägerplatte gegenüber der unteren Trägerplatte bewirkbar ist, wodurch das bewegliche Polsterteil von einer im Wesentlichen ebenen Nichtausstellposition in eine geneigte Ausstellposition bringbar ist, ist erfindungsgemäß vorgesehen, dass die untere Trägerplatte lagestabil im vorderen und hinteren Bereich an dafür vorgesehenen Querdrähten an einem Drahtrahmen befestigt ist, der fest mit der Karosserie in Verbindung steht.

Die Ausgestaltung mit dem Drahtrahmen wird im Ausführungsbeispiel detailliert erläutert.

Ferner wird in einer bevorzugten Ausgestaltung vorgeschlagen, dass die untere Trägerplatte im vorderen und hinteren Bereich an dafür vorgesehenen Querdrähten lagestabil an dem karosseriefesten Drahtrahmen befestigt ist.

In einer vorteilhaften Ausgestaltung ist die obere Trägerplatte an der unteren Trägerplatte befestigt.

Diese Befestigung ist in vorteilhafter Weise derart ausgebildet, dass die obere Trägerplatte mindestens ein Eingriffselement aufweist, das in mindestens ein Führungselement der unteren Trägerplatte eingreift. Dadurch werden keine separaten Verbindungselemente benötigt.

Dadurch ergibt sich in vorteilhafter Weise eine spezielle Anordnung des mindestens einen Eingriffselementes gegenüber dem mindestens einen Führungselement und eine Funktionalität der Verstelleinrichtung des Fahrzeugsitzes, die darin besteht, dass das mindestens eine Eingriffselement in der Nichtausstellposition vollständig in dem mindestens einen Führungselement angeordnet ist, während das mindestens eine Eingriffselement in der Ausstellposition aus dem mindestens einen Führungselement heraus bewegbar ist. Die Elemente, die obere Trägerplatte und die untere Trägerplatte können sich nahezu reibungslos und zusätzlich benötigte Verbindungselemente relativ zueinander bewegen.

Darüber hinaus ist vorgesehen, dass das mindestens eine Eingriffselement und das mindestens eine Führungselement halbkreisförmig ausgebildet sind. Zu der genannten Funktionalität an sich kommt in vorteilhafter Weise hinzu, dass die Bewegung der oberen Trägerplatte relativ zu der unteren Trägerplatte optimal auf die gewünschte Schwenkbewegung des auf der oberen Trägerplatte ruhenden beweglichen Polsterteiles abgestimmt ist.

Weitere bevorzugte Ausgestaltungen der Erfindung ergeben sich aus den übrigen, in den Unteransprüchen genannten Merkmalen.

Eine mögliche Ausführung der Erfindung wird nachfolgend in einem Ausführungsbeispiel erläutert. Für die Zwecke der Beschreibung soll die in Längsrichtung des Fahrzeuges liegende Richtung mit "x" bezeichnet werden. Mit "y" wird die Richtung in der Horizontalen des Fahrzeuges quer zur x-Richtung bezeichnet, und mit "z" wird die Richtung in der Vertikalen des Fahrzeuges quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem. Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

Es zeigen:
- Figur 1: eine perspektivische Darstellung einer Hintersitzanlage;
- Figur 2: einen Schnitt in Längsrichtung durch einen Fahrzeugsitz, als Bestandteil der Hintersitzanlage nach Figur 1;
- Figur 3: eine untere Trägerplatte des Fahrzeugsitzes;
- Figur 4: eine obere Schaumträgerplatte des Fahrzeugsitzes;
- Figur 5A bis 7B: einen Drahtrahmen, an dem die untere Trägerplatte befestigt ist;
- Figur 8: eine vergrößerte perspektivische Darstellung eines Sitzteiles der Hintersitzanlage nach Figur 1 bis 7B;
- Figur 9: eine vergrößerte schematische Darstellung des ersten Sitzteiles der Hintersitzanlage gemäß Figur 8, jedoch in einer Ansicht von oben;
- Figur 10: einen vergrößerten Längsschnitt des Sitzteiles des Fahrzeugsitzes, insbesondere des ersten Sitzteiles der Hintersitzanlage nach Figur 8 und 9.

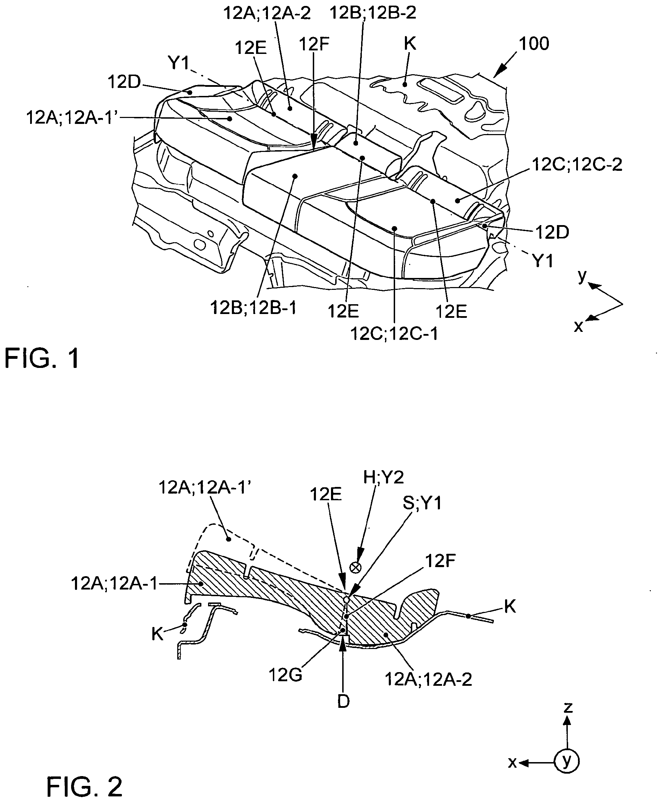

Figur 1 zeigt eine auf einer Karosserie K angeordnete Hintersitzanlage eines Kraftfahrzeuges.

Die Hintersitzanlage ist dreiteilig ausgeführt, wobei die an sich bekannte Dreiteiligkeit der Hintersitzanlage in einem Verhältnis von 40/20/40 ausgebildet ist. Ein 40%-Teil der Hintersitzanlage bildet einen Fahrzeugsitz 100, der Bestandteil der hinteren Sitzreihe eines Kraftfahrzeuges ist. Ein solcher Fahrzeugsitz 100 weist, wie in Figur 1 dargestellt, ein Sitzteil 12A (12A-1', 12A-2) und eine Rückenlehne auf, jedoch ist die zugehörige Rückenlehne nicht dargestellt.

Die perspektivische Darstellung der Figur 1 verdeutlicht bereits eine Besonderheit der vorliegenden Erfindung, die darin besteht, dass das erste Sitzteil 12A ein erstes bewegliches Polsterteil 12A-1 und ein zweites festes Polsterteil 12A-2 umfasst. Die Polsterteile 12A-1, 12A-2 liegen in x-Richtung, die der üblichen Fahrtrichtung des Kraftfahrzeuges entspricht, hintereinander und bilden in einer nicht geneigten Ausgangsposition (Nichtausstellposition) eine im Wesentlichen ebene Sitzfläche. In dieser Ausgangsposition bildet ein zweites Sitzteil 12B (Sitzmittelteil) und ein drittes Sitzteil 12C gemeinsam mit dem ersten Sitzteil 12A eine im Wesentlichen ebene Sitzfläche der dreiteiligen Hintersitzanlage.

Das zweite und dritte Sitzteil 12B, 12C bildet analog zu dem ersten Sitzteil 12A jeweils ein erstes bewegliches Polsterteil 12B-1, 12C-1 und ein zweites in x-Richtung dahinter liegendes festes Polsterteil 12B-2, 12C-2. Daraus wird deutlich, dass auch das zweite und dritte Sitzteil 12B, 12C die Voraussetzungen erfüllt, um eine Neigungsverstellung des Sitzteiles 12B, 12C analog zu dem ersten Sitzteil 12A durchführen zu können. Das erste Sitzteil 12A ist in Figur 1 bereits gegenüber der Karosserie K beziehungsweise gegenüber den benachbarten Sitzteilen 12B, 12C in einer nach oben ausgestellten geneigten Position (') (Ausstellposition) dargestellt. In Figur 1 ist also nur das erste bewegliche Polsterteil 12A-1' in die geneigte Position (') verstellt worden, wobei diese Funktion auch für das zweite und dritte bewegliche Polsterteil 12B-1 und 12C-1 ausführbar ist.

Jeweils seitlich des ersten Sitzteiles 12A und dritten Sitzteiles 12C - in y-Richtung gesehen - ist ein Seitenpolster 12D angeordnet, welches den Zwischenraum zwischen den Seitenbereichen der Karosserie K und den Seitenbereichen des ersten und dritten Sitzteiles 12A, 12C schließt, so dass in x-Richtung eine verbreiterte komfortable Sitzfläche aus den Sitzteilen 12A, 12B, 12C und den Seitenpolstern 12D ausgebildet ist.

Im Folgenden wird zur Vereinfachung der Erläuterung nur auf das erste Sitzteil 12A eingegangen, welches Teil des Fahrzeugsitzes 100 ist, der wiederum Bestandteil der hinteren Sitzanlage ist. Die Beschreibung kann analog auf das zweite und dritte Sitzteil 12B, 12C der Hintersitzanlage übertragen werden.

Die Figur 2 verdeutlicht die erfindungsgemäße Lösung in einem in x-Richtung liegenden Längsschnitt durch das erste Sitzteil 12A. In diesem Längsschnitt ist im Wesentlichen das erste bewegliche Polsterteil 12A-1 in seiner Ausgangsposition und in der geneigten Position 12A-1' sowie das erste feste Polsterteil 12A-2 oberhalb der Karosserie K dargestellt. Unterhalb des ersten beweglichen Polsterteiles 12A-1 ausgehend von seiner Ausgangsposition und oberhalb der Karosserie K ist ein Bauraum vorgehalten, in dem eine Einrichtung zur Neigungsverstellung des ersten beweglichen Sitzteiles 12A-1 angeordnet ist. Auf die detaillierte Ausgestaltung dieser Vorrichtung wird in den weiteren Figuren noch eingegangen.

Die Figur 2 verdeutlicht zunächst, dass in einer zweiteiligen Ausgestaltung der Polsterteile 12A-1, 12A-2 zwischen dem ersten beweglichen Polsterteil 12A-1 und dem zweiten festen Polsterteil 12A-2 eine vertikale in z-Richtung verlaufende Vertikaltrennfuge 12E ausgebildet ist. In der Ausgangsposition des ersten beweglichen Polsterteiles 12A-1 liegt die hintere Stirnfläche des ersten beweglichen Polsterteiles 12 parallel zu der vorderen Stirnfläche des ersten festen Polsterteiles 12A-2. Die Vertikaltrennfuge 12E bildet keinen Spalt 12F. Die Schwenkachse Y1 des beweglichen Polsterteiles 12A-1 liegt nahe dem oberen Ende der Vertikaltrennfuge 12E.

Die Schwenkachse Y1 ist um einen geringen vertikalen Abstand unterhalb der Oberflächen der angrenzenden Polsterteile 12A-1, 12A-2 angeordnet, so dass sich für das erste bewegliche Polsterteil 12A-1 gegenüber dem ersten festen Polsterteil 12A-2 eine hohe Drehpunktlage ausbildet. Dabei ist die Drehpunktlage des Drehpunktes der Schwenkachse Y1 gegenüber einem Hüftpunkt auf einer durchschnittlichen Person abgestimmt, deren Hüftpunktachse Y2 in y-Richtung liegend angeordnet ist.

Dadurch, dass die Schwenkachse Y1 nur wenig unterhalb der Oberflächen der angrenzenden Polsterteile 12A-1, 12A-2 liegt, kommt es bei der Bewegung des beweglichen Polsterteiles 12A-1 von der Nichtausstellposition in die Ausstellposition 12A-1' zu einer geringen Stauchung in einem Stauchungsbereich S des Schaumes beziehungsweise des gemeinsamen Bezuges im oberen Bereich der angrenzenden Polsterteile oberhalb der Schwenkachse Y1.

Unterhalb der Schwenkachse Y1 kommt es bei der Bewegung des beweglichen Polsterteiles 12A-1 von der Nichtausstellposition in die Ausstellposition 12A-1' zur Ausbildung eines kleinen Spaltes 12F, so dass es in diesem Bereich zu einer geringen Dehnung in einem Dehnungsbereich D des die Polsterteile 12A-1, 12A-2 im unteren Bereich gegebenenfalls überspannenden Bezuges kommt.

Dadurch, dass die beiden Polsterteile 12A-1, 12A-2 zumindest im oberen Bereich mit einem überspannenden Bezug versehen sind, nimmt ein Betrachter des Sitzteiles 12A in vorteilhafter Weise nicht wahr, dass das erste Sitzteil 12A ein vorderes bewegliches Polsterteil 12A-1 und ein hinteres festes Polsterteil 12A-2 umfasst. Die zwischen den in x-Richtung hintereinander liegenden Polsterteilen 12A-1, 12A-2 ausgebildete Vertikaltrennfuge 12E liegt somit unterhalb des Bezuges und ist für den Betrachter unsichtbar.

Bei einer einstückigen Ausgestaltung entfällt die Ausbildung der Vertikaltrennfuge 12E und des Spaltes 12F, während sich die Drehpunktanordnung und der Stauchungsbereich sowie der Dehnungsbereich in dem flexiblen Schaum und dem darüber und gegebenenfalls darunter angeordneten Bezug analog ausbildet.

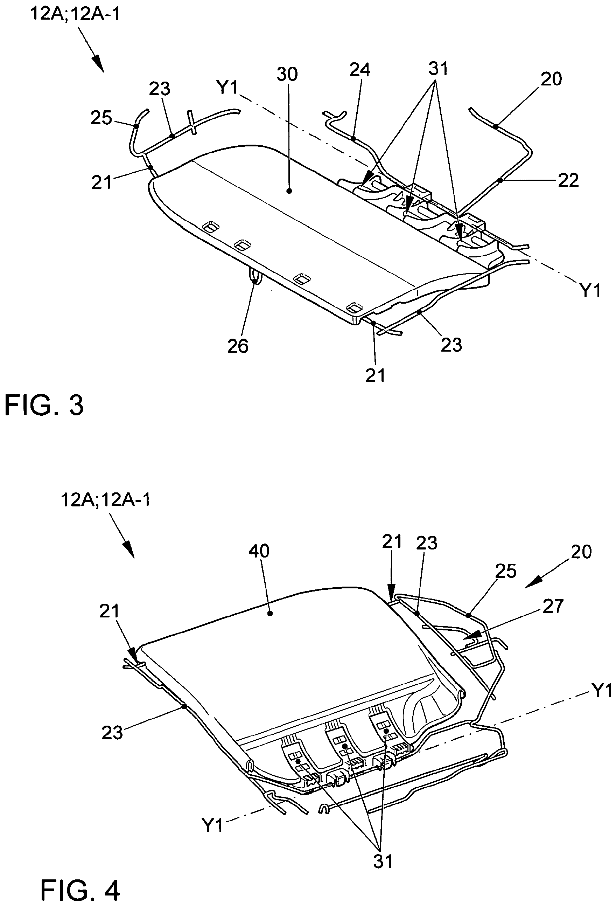

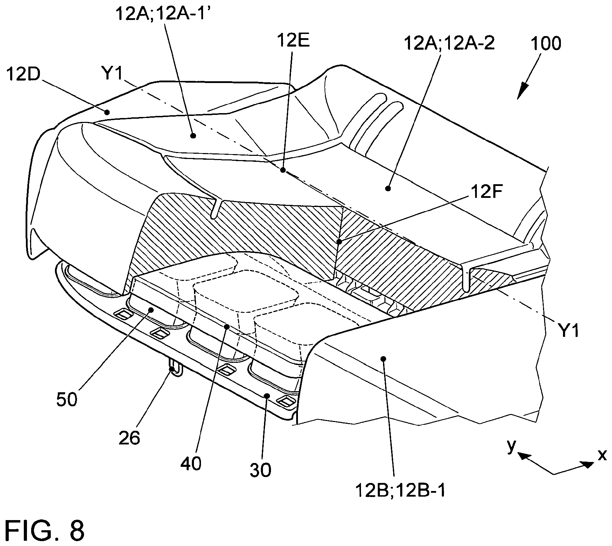

Die Figur 3 zeigt eine untere Trägerplatte 30, die wie Figur 8 verdeutlicht als Trägerelement für eine Neigungsverstelleinrichtung dient. Die untere Trägerplatte 30 liegt im Ausführungsbeispiel oberhalb Karosserie K auf einem Drahtrahmen 20, der fest mit der Karosserie K in Verbindung steht.

Die untere Trägerplatte 30 weist Führungselemente 31 auf, die dazu dienen eine in Figur 4 bereits auf der unteren Trägerplatte 30 angeordnete Schaumträgerplatte 40 zu fixieren. Die Führungselemente 31 sind halbkreisförmig ausgebildet. Der jeweils im Bereich der Führungselemente 31 liegende Bereich der unteren Trägerplatte 30 und der darüber liegenden oberen Schaumträgerplatte 40 sind somit ebenfalls halbkreisförmig ausgebildet. Der hintere Bereich auf der Schaumträgerplatte 40 wird in die eine Aufnahme bildenden Führungselemente 31 eingeschoben, so dass sich die untere Trägerplatte 30 zu der Schaumträgerplatte 40 in Nichtausstellposition zueinander im Wesentlichen in einer parallelen Lage befinden.

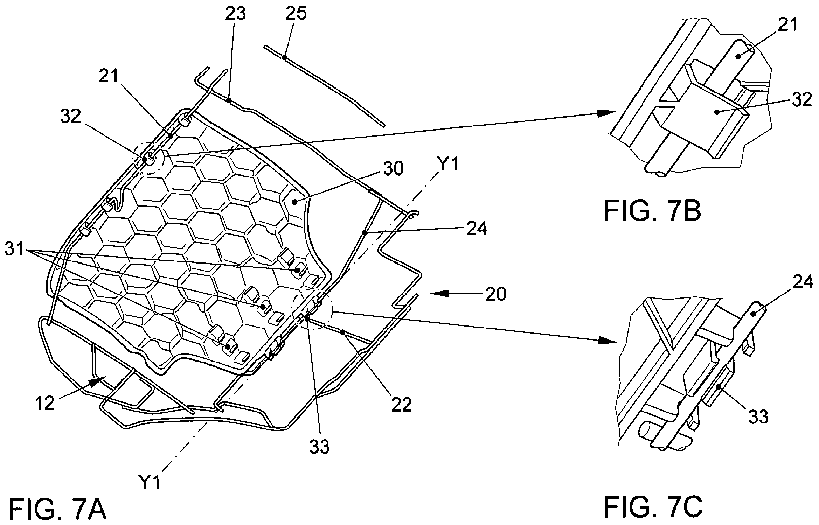

Die Figuren 3 bis 7C zeigen in einer Zusammenschau, wie die Trägerplatte 30 mit dem Drahtrahmen 20 in Verbindung steht. Die Figuren 7A bis 7C zeigen dabei den Drahtrahmen 20 und die untere Trägerplatte 30 in einer Unteransicht.

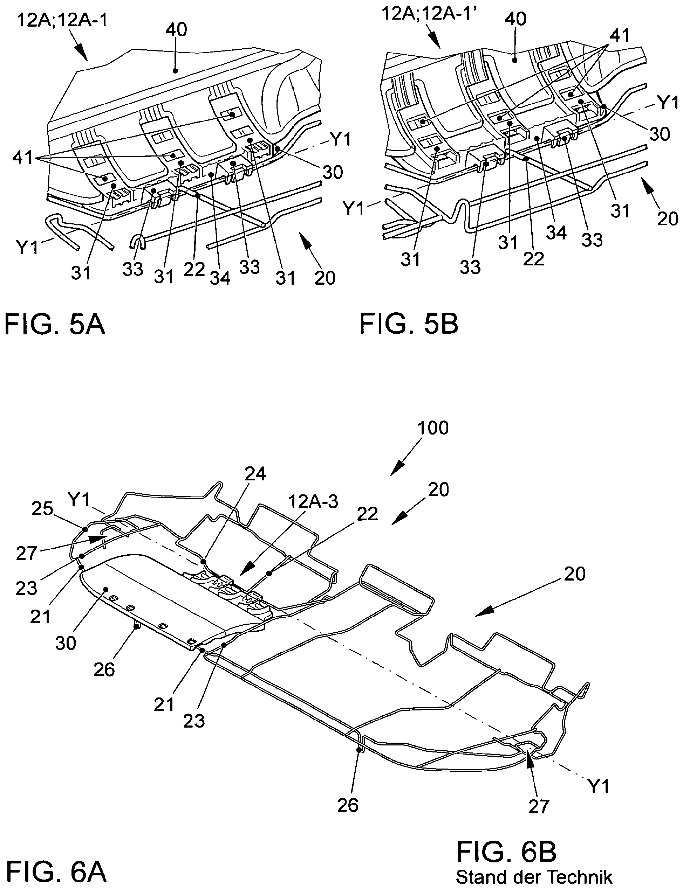

Ein zum Vergleich neben dem Drahtrahmen 20 liegender Drahtrahmen nach dem Stand der Technik zeigt Figur 6B. Dieser bekannte Drahtrahmen wird erfindungsgemäß durch weitere Drähte ergänzt beziehungsweise wird der Verlauf der Drähte geändert. Es wird innerhalb des Drahtrahmens 20 ein vorderer Querdraht 21 hinsichtlich seines Verlaufes geändert und zusätzlich ein hinterer Querdraht 24 ausgebildet, wie Figur 6A vergleichsweise zeigt. Der vordere Querdraht 21 liegt jetzt tiefer als der vordere Querdraht nach dem Stand der Technik und ist mit der Unterseite der unteren Trägerplatte 30 verbunden. Dadurch wird Bauraum für die Neigungsverstelleinrichtung und die obere Trägerplatte 40 geschaffen.

Zudem wird ein zusätzlicher hinterer Längsdraht 22 und ein zusätzlicher seitlicher Längsdraht 23 ausgebildet. Die Querdrähte 21, 24 liegen im eingebauten Zustand des Fahrzeugsitzes 100 im Wesentlichen in y-Richtung. Die Längsdrähte 22, 23 liegen im eingebauten Zustand des Fahrzeugsitzes 100 im Wesentlichen in x-Richtung.

Der vordere Querdraht 21 liegt im Einbauzustand des Fahrzeugsitzes 100 unterhalb der unteren Trägerplatte 30. Unterhalb der unteren Trägerplatte 30 sind, gemäß Figur 7B als Befestigungselemente Haken 32 angeordnet, mittels denen die untere Trägerplatte 30 am vorderen Querdraht 21 verrastet werden kann. Der karosserieseitig befestigte Drahtrahmen 20 sichert somit die untere Trägerplatte 30 in z-Richtung. Aus dem vorderen Querdraht 21 ist ein Rastmittel 26 ausgeformt, welches den vorderen Querdraht 21 lösbar mit der Karosserie K verbindet, indem das Rastmittel 26 in der Karosserie K einrastet. Bei einer breiten Hintersitzanlage werden wie Figur 6A, 6B zeigt zwei Rastmittel 26 vorgesehen.

Eine weitere Befestigung des Drahtrahmens 20 an der Karosserie K befindet sich jeweils seitlich des Drahtrahmens 20 (siehe Figur 6A, 6B) zwischen dem seitlichen Längsdraht 23 und einem Ausstelldraht 25, wobei der Ausstelldraht 25 und der seitliche Längsdraht 23 gleichzeitig als Unterstützung für das jeweilige Seitenpolster 12D dienen. Zwischen dem seitlichen Längsdraht 23 und einem Ausstelldraht 25 ist eine Haken/Öse Verbindung 27 (siehe Figur 6A, 6B) ausgeführt. Eine drahtrahmenseitige Öse greift in einen karosserieseitigen Haken ein. Dadurch ist ein im Ausführungsbeispiel mit seiner Längsachse über die gesamte Hintersitzanlage quer zu Fahrtrichtung x in y-Richtung ausgebildeter Drahtrahmen 20 dreipunktartig durch jeweils eine seitliche Haken/Öse Verbindung 27 und durch das Rastmittel 26 sicher mit der Karosserie L verbunden.

Parallel zu dem vorderen Querdraht 21 ist ein hinterer Querdraht 24 angeordnet. Der hintere Querdraht 24 wird innerhalb des Drahtrahmens 20 durch den hinteren Längsdraht 22 innerhalb des Drahtrahmens 20 lagestabil gehalten. In den hinteren Querdraht 24 rastet die untere Trägerplatte 30, gemäß Figur 5A, 5B und 7C mittels in z-Richtung offener Clips 33 ein, so dass die untere Trägerplatte auch in x-Richtung gesichert ist.

Der hintere Längsdraht 22 durchgreift ferner eine stirnseitige Wandung 34 der unteren Trägerplatte 30, so dass die untere Trägerplatte 30 am karosseriefesten Drahtrahmen 20 auch gegen Verschiebungen in y-Richtung gesichert ist.

Der vordere Querdraht 21 geht seitlich in den seitlichen Längsdraht 23 über an dem ein Seitenpolster 12D fixierbar ist, so dass das Seitenpolster 12 lagestabil neben dem ersten Sitzteil 12A anordbar ist.

Die Figuren 5A, 5B und 7A zeigen gemeinsam eine weitere Besonderheit der Erfindung. Die Figur 7A zeigt die Führungselemente 31 in einer Ansicht von unten. In den Figuren 5A, 5B sind die Führungselemente 31 vergrößert in einer Ansicht von oben dargestellt.

Die Führungselemente 31 sind als reibungsarme Aufnahmekörper ausgestaltet, deren Innenkontur mit der Außenkontur schienenartiger Eingriffselemente 41 der oberen Schaumträgerplatte 40 korrespondieren. Durch die stegartige Ausbildung der Führungselemente 31 sind die Eingriffselemente 41 reib- und formschlüssig beweglich, insbesondere reibungsarm und in weiterer vorteilhafter Weise ohne zusätzliche Elemente, wie Bügel, Scharniere oder dergleichen in den Führungselementen 31 angeordnet.

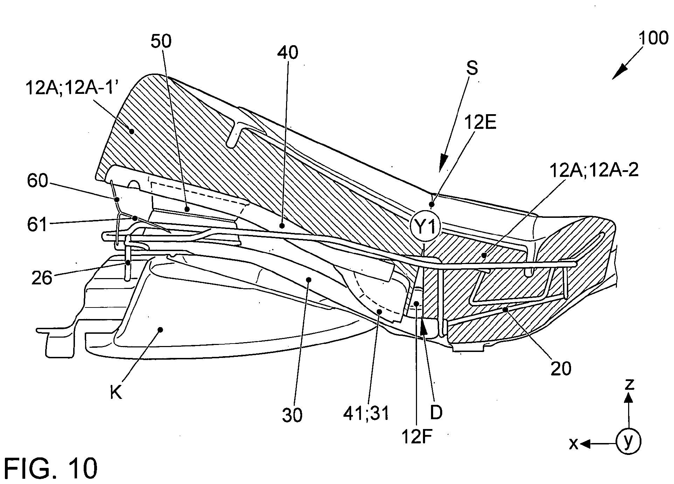

Figur 5A zeigt die Nichtausstellposition, während Figur 5B die Ausstellposition zeigt. Siehe dazu auch die Ausstellposition der Figur 10. In der nach oben geneigten Position (') des vorderen beweglichen Polsterteiles 12A-1' verlagert sich die obere Schaumträgerplatte 40 gegenüber der unteren Trägerplatte 30, so dass die schienenartigen Eingriffselemente 41 bei der Schwenkbewegung der oberen Schaumträgerplatte 40 auf einer halbkreisförmigen Bahn aus den Führungselementen 31 rutschen, wie Figur 5B zeigt. Die stirnseitigen Enden der Eingriffselemente 41 liegen in Figur 5B gegenüber Figur 5A gegenüber der Wandung 34 der unteren Trägerplatte 30 nicht mehr bündig an, sondern die Eingriffselemente 41 haben sich, wie die jetzt in den Führungselementen 31 liegenden Stirnseiten der Führungselemente 31 in Figur 5B verdeutlichen, gegenüber den Führungselementen 31 verschoben.

Der ursprüngliche Zustand (Figur 5A) wird wieder hergestellt, wenn die obere Schaumträgerplatte 40 in die Nichtausstellposition zurückkehrt. In dieser Nichtausstellposition sitzen die schienenartigen Eingriffselemente 41 vollständig in den Führungselementen 31. Die kreisförmige Ausbildung der Führungselemente 31 und der Eingriffselemente 41 sowie die reibungsarme bewegliche Anordnung der Eingriffselemente 41 in den Führungselementen 31 machen eine leichtgängige Bewegung der oberen Schaumträgerplatte 40 gegenüber der unteren Trägerplatte 30 möglich.

Figur 8 zeigt zur Verdeutlichung des schichtenartigen Aufbaus der Neigungsverstelleinrichtung das erste Sitzteil 12A, wobei der Schaum des beweglichen Polsterteiles 12A-1, welches sich in Figur 8 in der Ausstellposition 12A-1' befindet, zum Teil weggelassen und die obere Trägerplatte 40 transparent dargestellt wurde.

Auf der Karosserie K liegt die Trägerplatte 30, die mit dem Drahtrahmen 20 verbunden ist. Auf der Trägerplatte 30 liegen Luftkammern 50, die als Stellmittel zur Neigungsverstellung des beweglichen Polsterteiles 12A-1 dienen. Die Luftkammern 50 stellen eine weitere Besonderheit dar. Die Luftkammern 50 ermöglichen die Neigungsverstellung, ohne dass im Sichtbereich des Fahrzeugsitzes 100 beziehungsweise der Hintersitzanlage beziehungsweise im Bereich der Sitzfläche ein störendes Betätigungsmittel benötigt wird. Die Luftkammern 50 können über ein sehr kleines Betätigungselement zum zeitweisen Einschalten eines Kompressors gefüllt werden. Figur 8 zeigt die Luftkammern 50 passend zu der Ausstellposition des beweglichen Polsterteiles 12A-1' im gefüllten Zustand. Eine Entleerung der Luftkammern 50 findet durch Öffnen von Ablassventilen statt, die ebenfalls über eine Betätigungselement zumindest zeitweise geöffnet werden können, wobei die Kraft zum Zusammendrücken der Luftkammern in den entleerten Zustand durch das Eigengewicht des beweglichen Polsterteiles 12A-1 und gegebenenfalls zusätzlich durch das Gewicht einer auf dem Fahrzeugsitz 100 sitzenden Person bewirkt wird.

Es wird vorgeschlagen, für den zugehörigen Kompressor (nicht dargestellt) einen Bauraum im Seitenpolster 12D vorzuhalten.

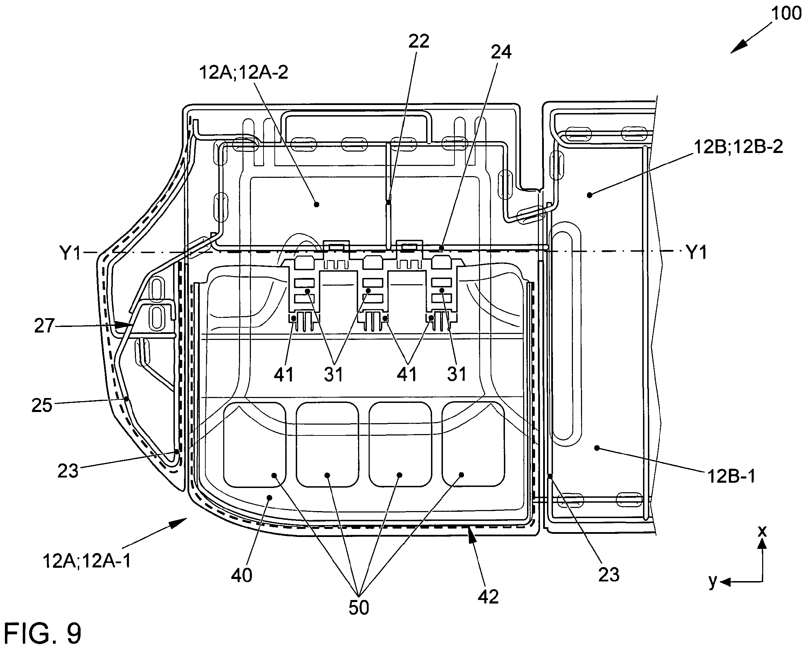

Figur 9 zeigt den Fahrzeugsitz 100 noch einmal in einer Ansicht von oben, wobei der Schaum der Polsterteile 12A-1 und 12A-2 weggelassen wurde. In dieser Ansicht wird mittels der strichpunktierten Linien der Verlauf der Trimmlinie verdeutlicht, an dem der Bezug befestigt und gestrafft wird. Der Bezug des Seitenpolsters 12D wird an dem seitlichen Ausstelldraht 25 und an einem Längsdraht des Seitepolsters 12D getrimmt. Der Bezug des beweglichen Polsterteiles 12A-1 wird über einen Trimmkanal 42 in der Schaumträgerplatte 40 statt. Die jeweilige Befestigung des Bezuges erfolgt im unteren Bereich des Seitenpolsters 12D beziehungsweise des beweglichen Polsterteiles 12A-1.

Figur 10 zeigt abschließend einen Längsschnitt durch den Fahrzeugsitz 100. Es wird vorgeschlagen, den sich in der Ausstellposition öffnenden Bereich an der Vorderseite des Fahrzeugsitzes 100 mit einem Sichtschutz 60, vorzugsweise einem dünnen flexiblen Stoff, abzuschirmen. Der Stoff umfasst auf seiner Rückseite ein Zugband oder dergleichen, welches den Stoff in der Ausstellposition des beweglichen Polsterteiles 12A-1' strafft und beim Übergang von der Ausstellposition in die Nichtausstellposition nach innen zieht.

Ein Fahrzeugsitz 100 oder eine Hintersitzanlage mit einer verstellbaren Rückenlehne und einem verstellbaren Sitzteil 12A weist den Vorteil auf, dass bei einer stark geneigten Rückenlehne durch die Neigungsverstellung des Sitzteiles 12A ein Oberkörper zum Unterkörper eines Aufsitzenden nicht überstreckt wird. Bekanntermaßen führt eine Kombination aus Lehnen- und Sitzneigungsverstellung zu einer deutlich ergonomischeren Sitzhaltung. Der vorgeschlagene Fahrzeugsitz 100, insbesondere als Teil einer Hintersitzanlage, stellt einen einfachen und kostengünstigen Fahrzeugsitz 100 dar, der den Sitzkomfort wie gewünscht verbessert.

Die Lösung kann gleichermaßen für eine ungeteilte Hintersitzanlage zur Anwendung kommen. In einem solchen Fall wird das zugehörige Sitzteil insgesamt in der für die Hintersitzanlage vorgesehenen Breite in eine Ausstellposition angehoben.

### Bezugszeichenliste

- 100: Fahrzeugsitz (Hintersitzanlage)
- 12A: erstes Sitzteil
- 12A-1: erstes bewegliches Polsterteil
- 12A-2: zweites festes Polsterteil
- 12A-3: hintere Anbindung
- 12B: zweites Sitzteil (Sitzmittelteil)
- 12B-1: zweites bewegliches Polsterteil
- 12B-2: zweites festes Polsterteil
- 12C: drittes Sitzteil
- 12C-1: drittes bewegliches Polsterteil
- 12C-2: drittes festes Polsterteil
- ('): geneigte Position
- 12D: Seitenpolster
- 12E: Vertikaltrennfuge
- 12F: Spalt
- K: Karosserie
- H: Hüftpunkt einer Person
- Y1: Schwenkachse
- Y2: Hüftachse
- S: Stauchungsbereich
- D: Dehnungsbereich
- 20: Drahtrahmen
- 21: vorderer Querdraht
- 22: hinterer Längsdraht
- 23: seitliche Längsdrähte
- 24: hinterer Querdraht
- 25: seitlicher Ausstelldraht
- 26: Rastmittel
- 27: Haken/Öse-Verbindung
- 30: untere Trägerplatte
- 31: Führungselemente
- 32: Haken
- 33: Clip
- 34: Wandung
- 40: obere Trägerplatte (Schaumträgerplatte)
- 41: Eingriffselemente
- 42: Trimmkanal
- 50: Luftkammern
- 60: Sichtschutz
- 61: Zugband

## Patentansprüche

1. Fahrzeugsitz (100) mit einer Neigungsverstelleinrichtung, umfassend eine Rückenlehne und ein Sitzteil (12A), welches mittels der Neigungsverstelleinrichtung zu einer von der Rückenlehne unabhängigen Einstellung der Sitzneigung um eine horizontale Schwenkachse (Y1) beweglich angeordnet ist, wobei die Schwenkachse (Y1) zwischen einem beweglichen Polsterteil (12A-1) und einem festen Polsterteil (12A-2) des Sitzteiles (12A) verläuft, wobei die Neigungsverstelleinrichtung eine obere Trägerplatte (40) und eine untere Trägerplatte (30) aufweist, wobei das bewegliche Polsterteil (12A-1) auf der oberen Trägerplatte (40) ruht, und zwischen den Trägerplatten (30, 40) ein Stellmittel (50) angeordnet ist, mittels dem eine Bewegung der oberen Trägerplatte (40) gegenüber der unteren Trägerplatte (30) bewirkbar ist, wodurch das bewegliche Polsterteil (12A-1) von einer im Wesentlichen ebenen Nichtausstellposition in eine geneigte Ausstellposition bringbar ist, **dadurch gekennzeichnet, dass** die untere Trägerplatte (30) lagestabil im vorderen und hinteren Bereich an dafür vorgesehenen Querdrähten (21, 24) an einem Drahtrahmen (20) befestigt ist.

2. Fahrzeugsitz nach Anspruch 1, **dadurch gekennzeichnet, dass** die Polsterteile (12A-1, 12B) einstückig oder zweistückig ausgebildet sind.

3. Fahrzeugsitz nach Anspruch 1 und 2, **dadurch gekennzeichnet, dass** die Schwenkachse (Y1) des beweglichen Polsterteiles (12A-1) nahe der Oberseite der aneinander angrenzenden Polsterteile (12A-1, 12A-2) im oberen Bereich einer Längsachse der Trennfuge (12E) liegt, wodurch eine hohe Drehpunktlage des beweglichen Polsterteiles (12A-1) gegenüber dem festen Polsterteil (12A-2) ausgebildet ist.

4. Fahrzeugsitz nach Anspruch 1, **dadurch gekennzeichnet, dass** die obere Trägerplatte (40) an der unteren Trägerplatte (30) befestigt ist.

5. Fahrzeugsitz nach Anspruch 1, **dadurch gekennzeichnet, dass** die obere Trägerplatte (40) mindestens ein Eingriffselement (41) aufweist, das in mindestens ein Führungselement (31) der unteren Trägerplatte (30) eingreift.

6. Fahrzeugsitz nach Anspruch 5, **dadurch gekennzeichnet, dass** das mindestens eine Eingriffselement (41) in der Nichtausstellposition vollständig in dem mindestens einen Führungselement (31) angeordnet ist, während das mindestens eine Eingriffselement (41) in der Ausstellposition aus dem mindestens einen Führungselement (31) heraus bewegbar ist.

7. Fahrzeugsitz nach Anspruch 6, **dadurch gekennzeichnet, dass** das mindestens eine Eingriffselement (41) und das mindestens eine Führungselement (31) halbkreisförmig ausgebildet sind.

8. Fahrzeugsitz nach Anspruch 6, **dadurch gekennzeichnet, dass** das mindestens eine Führungselement (31) als reibungsarme stegartige Aufnahme ausgebildet ist.

9. Fahrzeugsitz nach Anspruch 1, **dadurch gekennzeichnet, dass** das Stellmittel (50) mindestens eine Luftkammer ist, die über einen Kompressor befüllbar und über ein Ablassventil entleerbar ist.

10. Anordnung eines mit einer Karosserie (K) verbundenen Fahrzeugsitzes (100) mit einer Neigungsverstelleinrichtung, wobei der Fahrzeugsitz (100) eine Rückenlehne und ein Sitzteil (12A) umfasst, welches mittels der Neigungsverstelleinrichtung zu einer von der Rückenlehne unabhängigen Einstellung der Sitzneigung um eine horizontale Schwenkachse (Y1) beweglich angeordnet ist, wobei die Schwenkachse (Y1) zwischen einem beweglichen Polsterteil (12A-1) und einem festen Polsterteil (12A-2) des Sitzteiles (12A) verläuft, wobei die Neigungsverstelleinrichtung eine obere Trägerplatte (40) und eine untere Trägerplatte (30) aufweist, wobei das bewegliche Polsterteil (12A-1) auf der oberen Trägerplatte (40) ruht, und zwischen den Trägerplatten (30, 40) ein Stellmittel (50) angeordnet ist, mittels dem eine Bewegung der oberen Trägerplatte (40) gegenüber der unteren Trägerplatte (30) bewirkbar ist, wodurch das bewegliche Polsterteil (12A-1) von einer im Wesentlichen ebenen Nichtausstellposition in eine geneigte Ausstellposition bringbar ist, **dadurch gekennzeichnet, dass** die untere Trägerplatte (30) lagestabil im vorderen und hinteren Bereich an dafür vorgesehenen Querdrähten (21, 24) an einem Drahtrahmen (20) befestigt ist, der fest mit der Karosserie (K) in Verbindung steht.

## Claims

1. Vehicle seat (100) having an inclination adjustment device, comprising a backrest and a seat part (12A), which is arranged movably about a horizontal pivot axis (Y1) for setting the inclination of the seat independently of the backrest by means of the inclination adjustment device, wherein the pivot axis (Y1) runs between a movable upholstered part (12A-1) and a fixed upholstered part (12A-2) of the seat part (12A), wherein the inclination adjustment device has an upper support plate (40) and a lower support plate (30), wherein the movable upholstered part (12A-1) rests on the upper support plate (40), and an actuating means (50) is arranged between the support plates (30, 40), by means of which a movement of the upper support plate (40) in relation to the lower support plate (30) can be brought about, as a result of which the movable upholstered part (12A-1) can be brought from a substantially flat non-deployed position into an inclined deployed position, **characterized in that** the lower support plate (30) is fastened in a positionally stable manner in the front and rear region on transverse wires (21, 24) provided for this purpose to a wire frame (20).

2. Vehicle seat according to Claim 1, **characterized in that** the upholstered parts (12A-1, 12B) are designed as a single piece or as two pieces.

3. Vehicle seat according to Claims 1 and 2, **characterized in that** the pivot axis (Y1) of the movable upholstered part (12A-1) lies close to the upper side of the mutually adjacent upholstered parts (12A-1, 12A-2) in the upper region of a longitudinal axis of the separating joint (12E), as a result of which a high pivot point position of the movable upholstery part (12A-1) in relation to the fixed upholstered part (12A-2) is formed.

4. Vehicle seat according to Claim 1, **characterized in that** the upper support plate (40) is fastened to the lower support plate (30).

5. Vehicle seat according to Claim 1, **characterized in that** the upper support plate (40) has at least one engagement element (41) which engages in at least one guide element (31) of the lower support plate (30) .

6. Vehicle seat according to Claim 5, **characterized in that** the at least one engagement element (41) in the non-deployed position is completely arranged in the at least one guide element (31) while the at least one engagement element (41) in the deployed position is movable out of the at least one guide element (31).

7. Vehicle seat according to Claim 6, **characterized in that** the at least one engagement element (41) and the at least one guide element (31) are of semicircular design.

8. Vehicle seat according to Claim 6, **characterized in that** the at least one guide element (31) is designed as a low-friction, web-like receptacle.

9. Vehicle seat according to Claim 1, **characterized in that** the actuating means (50) is at least one air chamber which is fillable via a compressor and is emptyable via an outlet valve.

10. Arrangement of a vehicle seat (100), which is connected to a body (K), with an inclination adjustment device, wherein the vehicle seat (100) comprises a backrest and a seat part (12A), which is arranged movably about a horizontal pivot axis (Y1) for setting the inclination of the seat independently of the backrest by means of the inclination adjustment device, wherein the pivot axis (Y1) runs between a movable upholstered part (12A-1) and a fixed upholstered part (12A-2) of the seat part (12A), wherein the inclination adjustment device has an upper support plate (40) and a lower support plate (30), wherein the movable upholstered part (12A-1) rests on the upper support plate (40), and an actuating means (50) is arranged between the support plates (30, 40), by means of which a movement of the upper support plate (40) in relation to the lower support plate (30) can be brought about, as a result of which the movable upholstered part (12A-1) can be brought from a substantially flat non-deployed position into an inclined deployed position, **characterized in that** the lower support plate (30) is fastened in a positionally stable manner in the front and rear region on transverse wires (21, 24) provided for this purpose to a wire frame (20) which is fixedly connected to the body (K).

## Revendications

1. Siège de véhicule (100) comprenant un dispositif de réglage de l'inclinaison, comportant un dossier et une partie d'assise (12A), laquelle est disposée de manière mobile autour d'un axe de pivotement horizontal (Y1) en vue d'un réglage de l'inclinaison de siège indépendant du dossier au moyen du dispositif de réglage de l'inclinaison, l'axe de pivotement (Y1) s'étendant entre une partie de rembourrage mobile (12A-1) et une partie de rembourrage fixe (12A-2) de la partie d'assise (12A), le dispositif de réglage de l'inclinaison comprenant une plaque de support supérieure (40) et une plaque de support inférieure (30), la partie de rembourrage mobile (12A-1) reposant sur la plaque de support supérieure (40), et un moyen de réglage (50) étant disposé entre les plaques de support (30, 40), moyen de réglage à l'aide duquel un déplacement de la plaque de support supérieure (40) par rapport à la plaque de support inférieure (30) peut être provoqué, de sorte que la partie de rembourrage mobile (12A-1) puisse être amenée d'une position non sortie sensiblement plane à une position sortie inclinée, **caractérisé en ce que** la plaque de support inférieure (30) est fixée, dans une position stable, dans la région avant et arrière sur des fils métalliques transversaux (21, 24), prévus à cet effet, sur un cadre en fil métallique (20).

2. Siège de véhicule selon la revendication 1, **caractérisé en ce que** les parties de rembourrage (12A-1, 12B) sont constituées d'une pièce ou de deux pièces.

3. Siège de véhicule selon les revendications 1 et 2, **caractérisé en ce que** l'axe de pivotement (Y1) de la partie de rembourrage mobile (12A-1) se situe près du côté supérieur des parties de rembourrage (12A-1, 12A-2) adjacentes l'une à l'autre dans la région supérieure d'un axe longitudinal du joint de séparation (12E), de sorte qu'une position élevée du centre de rotation de la partie de rembourrage mobile (12A-1) par rapport à la partie de rembourrage fixe (12A-2) soit réalisée.

4. Siège de véhicule selon la revendication 1, **caractérisé en ce que** la plaque de support supérieure (40) est fixée à la plaque de support inférieure (30).

5. Siège de véhicule selon la revendication 1, **caractérisé en ce que** la plaque de support supérieure (40) comprend au moins un élément d'entrée en prise (41), lequel vient en prise dans au moins un élément de guidage (31) de la plaque de support inférieure (30).

6. Siège de véhicule selon la revendication 5, **caractérisé en ce que** ledit au moins un élément d'entrée en prise (41) est disposé complètement dans ledit au moins un élément de guidage (31) dans la position non sortie, tandis que ledit au moins un élément d'entrée en prise (41) peut être déplacé hors dudit au moins un élément de guidage (31) dans la position sortie.

7. Siège de véhicule selon la revendication 6, **caractérisé en ce que** ledit au moins un élément d'entrée en prise (41) et ledit au moins un élément de guidage (31) sont réalisés sous forme semi-circulaire.

8. Siège de véhicule selon la revendication 6, **caractérisé en ce que** ledit au moins un élément de guidage (31) est réalisé sous forme de logement à faible friction de type nervure.

9. Siège de véhicule selon la revendication 1, **caractérisé en ce que** le moyen de réglage (50) est au moins une chambre à air qui peut être remplie par le biais d'un compresseur et peut être vidée par le biais d'une soupape d'évacuation.

10. Système d'un siège de véhicule (100) relié à une carrosserie (K) et doté d'un dispositif de réglage de l'inclinaison, le siège de véhicule (100) comportant un dossier et une partie d'assise (12A), laquelle est disposée de manière mobile autour d'un axe de pivotement horizontal (Y1) en vue d'un réglage de l'inclinaison de siège indépendant du dossier au moyen du dispositif de réglage de l'inclinaison, l'axe de pivotement (Y1) s'étendant entre une partie de rembourrage mobile (12A-1) et une partie de rembourrage fixe (12A-2) de la partie d'assise (12A), le dispositif de réglage de l'inclinaison comprenant une plaque de support supérieure (40) et une plaque de support inférieure (30), la partie de rembourrage mobile (12A-1) reposant sur la plaque de support supérieure (40), et un moyen de réglage (50) étant disposé entre les plaques de support (30, 40), moyen de réglage à l'aide duquel un déplacement de la plaque de support supérieure (40) par rapport à la plaque de support inférieure (30) peut être provoqué, de sorte que la partie de rembourrage mobile (12A-1) puisse être amenée d'une position non sortie sensiblement plane à une position sortie inclinée, **caractérisé en ce que** la plaque de support inférieure (30) est fixée, dans une position stable, dans la région avant et arrière sur des fils métalliques transversaux (21, 24), prévus à cet effet, sur un cadre en fil métallique (20) qui est en liaison fixe avec la carrosserie (K).
